Europäisches Patentamt

European Patent Office

Office européen des brevets

(19)

(11) Veröffentlichungsnummer: **0 310 806**
**B1**

(12) **EUROPÄISCHE PATENTSCHRIFT**

(45) Veröffentlichungstag der Patentschrift: **09.01.91**

(51) Int. Cl.⁵: **G 01 B 21/08,** G 01 B 7/06

(21) Anmeldenummer: **88114009.9**

(22) Anmeldetag: **27.08.88**

(54) Messverfahren zur Bestimmung der Dicke eines Magnetbandes.

(30) Priorität: **03.09.87 DE 3729407**

(43) Veröffentlichungstag der Anmeldung:
**12.04.89 Patentblatt 89/15**

(45) Bekanntmachung des Hinweises auf die
Patenterteilung:
**09.01.91 Patentblatt 91/02**

(84) Benannte Vertragsstaaten:
**AT DE FR GB NL**

(56) Entgegenhaltungen:
**DE-A-2 157 570**
**US-A-4 024 645**

(73) Patentinhaber: **BASF Aktiengesellschaft**
**Carl-Bosch-Strasse 38**
**D-6700 Ludwigshafen (DE)**

(72) Erfinder: **Baur, Reinhold, Dr.**
**Eschbachstrasse 1**
**D-7601 Ortenberg (DE)**
Erfinder: **Klausmann, Juergen**
**An der Tagmess 10 a**
**D-7600 Offenburg (DE)**

Courier Press, Leamington Spa, England.

## Beschreibung

Die Erfindung betrifft ein Meßverfahren zur Bestimmung der Dicke eines zu einem Wickel aufgespulten Magnetbandes.

Bei der Herstellung von Magnetbandkassetten, beispielsweise Audio- oder Videokassetten, wird das Magnetband in vorgegebener Länge von einem Rohwickel, der einen Bandvorrat für eine Vielzahl von Kassetten enthält, mittels eines bereits an den Wickelkernen der Kassette befestigten Vorspannbandes in diese gespult. Dieser als Konfektionierung bezeichnete Teil der Kassettenherstellung wird auf automatisch arbeitenden Ladegeräten vorgenommen. Es ist dabei erforderlich, die Dicke des Magnetbandes zu überwachen, um ein Über- bzw. Unterschreiten des Toleranzwertes feststellen zu können.

Bischer wurden daher die Rohwickel stichprobenweise gemessen, mit dem Nachteil, daß die Probenrate wegen der Vielzahl der aus einem Rohrwickel zu konfektionierenden Kassetten hoch sein muß, um eine möglichst sichere Überwachung zu gewährleisten. Sowohl der arbeitstechnische als auch zeitliche Aufwand hierfür stehen einer rationellen Kassettenherstellung mit hohem Arbeitstakt im Wege. Ferner wäre eine für jede Kassette vorgesehene, genaue Banddickenmessung von Vorteil, da es dann möglich sein würde, bei an der unteren Toleranzgrenze liegendem, also sehr dünnem Bandmaterial zusätzliche Bandlängen auf den Wickelkern der Kassette zu spulen, um für Videogeräte mit automatischer Bandtypenerkennung einen Mindestwickeldurchmesser zu gewährleisten.

Es bestand daher die Aufgabe, ein Meßverfahren zu entwickeln, durch das die Dicke eines Magnetbandes während des Aufspulens zu einem Bandwickel bestimmt werden kann.

Die Lösung der Aufgabe besteht gemäß der Erfindung in einem Meßvecfahren, das durch folgende Verfahrensschritte gekennzeichnet ist:

— Zählen der Umdrehungen $n_B$ des Wickelkerns mit dem Radius $r_o$ beim Aufspulen des Magnetbandes

— Messen der aufgespulten Bandlänge $1_B$

— Ermittlung der Banddicke d nach der mathematischen Beziehung

$$d = \frac{1_B}{\pi n_B^2} - \frac{2r_o}{n_B}$$

In Weiterbildung des Meßverfahrens nach der Erfindung wird die mittlere Dicke $d_{ij}$ eines Bandabschnitts während des Aufspulens auf den Wickelkern mit dem Radius $r_o$ mittels eines Mikroprozessors aus der aufgespulten Länge $1_{ij}$ des Bandabschnitts und der damit korrelierenden Umdrehungszahl $n_{ij}$ des Wickelkerns nach der mathematischen Beziehung

$$d_{ij} = \frac{1_{ij}}{\pi n_{ij}^2} - \frac{2l_{oi}}{\pi n_{oi} n_{ij}} + \frac{2r_o}{n_{ij}}$$

fortlaufend ermittelt, wobei $l_{oi}$ bzw. $n_{oi}$ die bis zum Bandabschnitt bereits aufgespulte Bandlänge bzw. die damit korrelierende Umdrehungszahl des Wickelkerns ist.

Eine vorteilhafte Ausgestaltung des Meßverfahrens besteht darin, daß die Banddicke d mittels eines Mikroprozessors aus den Meßdaten ermittelt wird und in Abhängigkeit des Ergebnisses die Sollänge $l_s$ des aufzuspulenden Magnetbandes hinsichtlich eines Mindestwickeldurchmessers $r_1$ nach der mathematischen Beziehung

$$\Delta l = \frac{\pi(r_1^2 - r_o^2)}{d} - l_s$$

durch eine zusätzliche Bandlänge $\Delta l$ ergänzt wird.

Die Erfindung ist anhand von Anwendungsbeispielen nachfolgend erläutert.

Bei auf einem Ladegerät konfektionierten Magnetbandkassetten soll die Dicke d des jeweils auf den Wickelkern einer Kassette gespulten Bandes überwacht und hierfür während des Konfektioniervorgangs nach folgendem Meßverfahren gearbeitet werden:

— Zählen der Umdrehungen $n_B$ des Wickelkerns mit dem Radius $r_o$ beim Aufspulen des Magnetbandes

— Zählen der Impulse einer Bandlängenmeßeinrichtung zur Ermittlung der aufgespulten Bandlänge $l_B$

— Eichung zwischen der mittels einer Dickenmeßlehre direkt gemessenen und der nach dem Spulvorgang aus dem Wickeldurchmesser und der Anzahl der Wickellagen ermittelten Banddicke, die von den Betriebsbedingungen des Ladegerätes und den physikalischen Eigenschaften des Bandes, beispielswerte dessen Oberflächenrauhigkeit, abhängt—im folgenden effektive Banddicke genannt.

— Ermittlung der Banddicke d nach der mathematischen Beziehung

$$d = \frac{l_B}{\pi n_B^2} - \frac{2r_o}{n_B}$$

mittels eines Mikroprozessors.

Durch Vergleich der auf diese Weise ermittelten Banddicke mit vorgegebenen Toleranzwerten kann eine Überwachung dadurch erfolgen, daß bei Über- bzw. Unterschreiten der Grenzwerte ein Signal zur Alarmierung und/oder Abschaltung des Ladegerätes erzeugt wird.

Bei Videogeräten mit automatischer Erkennung des Bandtyps kann es bei Bändern, deren Dicke an der unteren Toleranzgrenze liegt, zur Fehlerkennung kommen, da der Bandtyp über die Wickelfläche ermittelt wird. Der zur richtigen Erkennung notwendige Mindestwickeldurchmesser $r_1$ kann durch zusätzliches Aufspulen von Band in Abhängigkeit von der mittleren Banddicke eingestellt werden. Zur Bestimmung dieser die Sollänge $l_s$ des aufzuspulenden Magnetbandes ergänzenden Bandlänge $\Delta l$ wird zunächst die Banddicke d, wie oben beschrieben, ermittelt. Die Bandlänge $\Delta l$ ergibt sich dann nach der mathematischen Beziehung

$$\Delta l = \frac{\pi(r_1^2 - r_0^2)}{d} - l_s$$

Bei vorgegebener, auf einen Wickelkern einer Kassette aufzuspulender Bandlänge kann die Banddicke bezüglich der Toleranzwerte über die Anzahl der Umdrehungen $n_B$ des Wickelkerns nach folgenden Kriterien überwacht werden:

$n_{min}$: minimal zulässige Anzahl Umdrehungen
$n_B < n_{min} \rightarrow$: Fehlermeldung Band zu dick
$n_{max}$: maximal zulässige Anzahl Umdrehungen
$n_B > n_{max} \rightarrow$: Fehlermeldung Band zu dünn
$n_G$: Anzahl Umdrehungen für Aufspulen einer zusätzlichen Bandlänge $\Delta l$

$$n_{min} < n_B < n_G \rightarrow \Delta l = (n_B - n_G) \cdot f$$

der Korrekturfaktor f ergibt sich aus den Betriebsbedingungen des Ladegerätes (Bandzug, Wickelgeschwindigkeit) und wird im Versuch ermittelt.

Nach einer weiteren Ausgestaltung des Meßverfahrens nach der Erfindung kann eine laufende Überwachung der Dicke eines aufspulenden Bandes, beispielsweise auf stellenweise auftretende Unregelmäßigkeiten, in der Weise durchgeführt werden, daß die mittlere Dicke $d_{ij}$ eines Bandabschnitts während des Aufspulens auf den Wickelkern mit dem Radius $r_0$ mittels eines Mikroprozessors aus der aufgespulten Länge $l_{ij}$ des Bandabschnitts und der damit korrelierenden Umdrehungszahl $n_{ij}$ des Wickelkerns nach der mathematischen Beziehung

$$d_{ij} = \frac{l_{ij}}{\pi n_{ij}^2} = \frac{2l_{oi}}{\pi n_{oi} \cdot n_{ij}} + \frac{2r_0}{n_{ij}}$$

forlaufend ermittelt wird. Dabei sind $l_{oi}$ bzw. $n_{oi}$ die bis zum Bandabschnitt bereits aufgespulte Bandlänge bzw. die damit korrelierende Umdrehungszahl des Wickelkerns.

## Patentansprüche

1. Meßverfahren zur Bestimmung der Dicke eines zu einem Wickel aufgespulten Magnetbandes, gekennzeichnet durch folgende Verfahrensschritte:
— Zählen der Umdrehungen $n_B$ des Wickelkerns mit dem Radius $r_0$ beim Aufspulen des Magnetbandes
— Messen der aufgespulten Bandlänge $l_B$
— Ermittlung der Banddicke d nach der mathematischen Beziehung

$$d = \frac{l_B}{\pi n_B^2} - \frac{2r_0}{n_B}$$

2. Meßverfahren nach Anspruch 1, dadurch gekennzeichnet, daß die mittlere Dicke $d_{ij}$ eines Bandabschnitts während des Aufspulens auf den Wickelkern mit dem Radius $r_0$ mittels eines Mikroprozessors aus der aufgespulten Länge $l_{ij}$ des Bandabschnitts und der damit korrelierenden Umdrehungszahl $n_{ij}$ des Wickelkerns nach der mathematischen Beziehung

$$d_{ij} = \frac{l_{ij}}{\pi n_{ij}^2} - \frac{2l_{oi}}{\pi n_{oi} n_{ij}} + \frac{2r_0}{n_{ij}}$$

fortlaufend ermittelt wird, wobei $l_{oi}$ bzw. $n_{oi}$ die bis zum Bandabschnitt bereits aufgespulte Bandlänge bzw. die damit korrelierende Umdrehungszahl des Wickelkerns ist.

3. Meßverfahren nach Anspruch 1 oder 2, dadurch gekennzeichnet, daß die Banddicke d mittels eines Mikroprozessors aus den Meßdaten ermittelt wird und in Abhängigkeit des Ergebnisses die Sollänge $l_s$ des aufzuspulenden Magnetbandes hinsichtlich eines Mindestwickeldurchmessers $r_1$ nach der mathematischen Beziehung

$$\Delta l = \frac{\pi(r_1^2 - r_0^2)}{d} - l_s$$

durch eine zusätzliche Bandlänge $\Delta l$ ergänzt wird.

## Revendications

1. Procédé de mesure pour la détermination de l'épaisseur d'une bande magnétique enroulée en bobine, caractérisée par les étapes de procédé suivantes:
— comptage du nombre de tours $n_B$ du noyau de bobinage de rayon $r_0$ lors de l'enroulement de la bande magnétique
— mesure de la longueur de bande enroulée $l_B$
— détermination de l'épaisseur de la bande d selon la relation mathématique

$$d = \frac{l_B}{\pi n_B^2} - \frac{2r_0}{n_B}$$

2. Procédé de mesure selon la revendication 1, caractérisé par le fait qu'on détermine en continu l'épaisseur moyenne $d_{ij}$ d'une section de bande pendant l'enroulement sur le noyau de bobinage de rayon $r_0$, au moyen d'un microprocesseur, à partir de la longueur de section de bande enroulée $l_{ij}$ et du nombre de tours de noyau de bobinage en corrélation avec elle, selon la relation mathématique.

$$d_{ij} = \frac{l_{ij}}{\pi n_{ij}^2} - \frac{2l_{oi}}{\pi n_{oi} n_{ij}} + \frac{2r_0}{n_{ij}}$$

$l_{oi}$ étant la longueur de bande déjà enroulée jusqu'à la section de bande et $n_{oi}$ le nombre de tours du noyau de bobinage en corrélation avec celle-ci.

3. Procédé de mesure selon la revendication 1 ou 2, caractérisé par le fait qu'on détermine l'épaisseur de bande d à partir des données de mesure au moyen d'un microprocesseur et, en fonction du résultat, on supplémente la longueur nominale $l_s$ de la bande magnétique à enrouler, d'une longueur de bande additionnelle $\Delta l$, compte tenu d'un diamètre de bobinage minimal $r_1$, et selon la relation mathématique

$$\Delta l = \frac{\pi(r_1{}^2 - r_o{}^2)}{d} - l_s$$

## Claims

1. A method of measurement for determining the thickness of a magnetic tape wound in roll form, comprising the following steps:
— counting the number of revolutions $n_B$ of the hub of radius $r_o$ during the winding up of the magnetic tape,
— measuring the length of wound tape $l_B$, and
— determining the tape thickness d using the mathematical relation:

$$d = \frac{l_B}{\pi n^2{}_B} - \frac{2r_o}{n_B}$$

2. A method of measurement as claimed in claim 1, wherein the average thickness $d_{ij}$ of a tape section is computed continuously during the winding onto the hub of radius $r_o$ by a microprocessor from the wound length $l_{ij}$ of the tape section and the correlated number of revolutions $n_{ij}$ of the hub using the mathematical relation:

$$d_{ij} = \frac{l_{ij}}{\pi n^2{}_{ij}} - \frac{2l_{oi}}{\pi n_{oi} n_{ij}} + \frac{2r_o}{n_{ij}}$$

where $l_{oi}$ and $n_{oi}$ are respectively the length of wound tape preceding the tape section and the correlated number of revolutions of the hub.

3. A method of measurement as claimed in claim 1 or 2, wherein the tape thickness d is computed by a microprocessor from the measured data and, as a function of the result, the target length $l_s$ of the magnetic tape to be wound to obtain a minimum roll diameter $r_1$ is extended in accordance with the mathematical relation:

$$\Delta l = \frac{\pi(r_1{}^2 - r_o{}^2)}{d} - l_s$$

by an additional tape length $\Delta l$.